(19) Europäisches Patentamt
European Patent Office
Office européen des brevets

(11) **EP 4 626 081 A1**

(12) **EUROPEAN PATENT APPLICATION**
published in accordance with Art. 153(4) EPC

(43) Date of publication:
01.10.2025 Bulletin 2025/40

(21) Application number: 23909609.2

(22) Date of filing: 31.10.2023

(51) International Patent Classification (IPC):
*H04W 48/16* (2009.01)

(52) Cooperative Patent Classification (CPC):
H04W 48/08; H04W 48/16; H04W 48/18

(86) International application number:
PCT/CN2023/128710

(87) International publication number:
WO 2024/139676 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.12.2022 CN 202211719047

(71) Applicant: Huawei Technologies Co., Ltd.
Shenzhen, Guangdong 518129 (CN)

(72) Inventors:
• XU, Rui
  Shenzhen, Guangdong 518129 (CN)
• DING, Guozhi
  Shenzhen, Guangdong 518129 (CN)
• YU, Guitang
  Shenzhen, Guangdong 518129 (CN)
• LIU, Ye
  Shenzhen, Guangdong 518129 (CN)

(74) Representative: Gill Jennings & Every LLP
The Broadgate Tower
20 Primrose Street
London EC2A 2ES (GB)

(54) **METHOD FOR SENDING PROBE REQUEST MESSAGE, AND COMMUNICATION APPARATUS**

(57) This application provides a method for sending a probe request packet and a communication apparatus. In the method, a first probe request packet is sent, where information carried in the first probe request packet is less than information carried in a second probe request packet, and the second probe request packet is used for exchanging capability information between the terminal and a to-be-connected access point device; and a probe response packet from the access point device is received. In this solution, when scanning time of a single channel remains unchanged, because time for sending the probe request packet is shortened, there is more time for monitoring the probe response packet, so that more access point devices can be obtained through scanning, thereby improving average scanning efficiency of a single round of scanning. Because the time for sending the probe request packet is shortened, power consumption of the terminal is reduced. Because the time for sending the probe request packet is shortened, air interface occupancy is reduced. When air interface occupancy is reduced for a large quantity of terminals, air interface congestion can be significantly improved, and throughputs and throughput rates of the terminals are improved.

FIG. 5

**Description**

CROSS-REFERENCE TO RELATED APPLICATIONS

This application claims priority to Chinese Patent Application No. 202211719047.4, filed with the China National Intellectual Property Administration on December 30, 2022 and entitled "METHOD FOR SENDING PROBE REQUEST PACKET AND COMMUNICATION APPARATUS", which is incorporated herein by reference in its entirety.

TECHNICAL FIELD

Embodiments of this application relate to the field of wireless communication technologies, and specifically, to a method for sending a probe request packet and a communication apparatus.

BACKGROUND

Currently, in a plurality of application scenarios, a terminal needs to scan for access point devices around the terminal. For example, in an internet access scenario, before accessing an access point device (for example, a router), the terminal needs to scan for specific access point devices available for selection around the terminal, and then displays, on an interface of the terminal, names of access point devices obtained through scanning, so that a user can select a specific access point device to start to access the internet.

In an application in which the terminal scans for the access point device, how to improve scanning efficiency needs to be resolved.

SUMMARY

This application provides a method for sending a probe request packet and a communication apparatus, to improve scanning efficiency.

According to a first aspect, an embodiment of this application provides a method for sending a probe request packet. The method may be performed by a terminal or a module (such as a chip) used in a terminal. The method includes: sending a first probe request packet, where information carried in the first probe request packet is less than information carried in a second probe request packet, and the second probe request packet is used for exchanging capability information between the terminal and a to-be-connected access point device; and receiving a probe response packet from the access point device.

In the foregoing solution, the following beneficial effects are implemented: First, when scanning time of a single channel remains unchanged, because time for sending the probe request packet is shortened, there is more time for monitoring the probe response packet, so that more access point devices can be obtained through scanning, thereby improving average scanning efficiency of a single round of scanning. Second, because the time for sending the probe request packet is shortened, power consumption of the terminal is reduced. Third, because the time for sending the probe request packet is shortened, air interface occupancy is reduced. When air interface occupancy is reduced for a large quantity of terminals, air interface congestion can be significantly improved, and throughputs and throughput rates of the terminals are improved.

In a possible implementation method, the first probe request packet is sent in a scanning scenario of the access point device.

In a possible implementation method, the scanning scenario of the access point device includes one or more of the following: obtaining a scanning scenario of an access point device around the terminal, a scanning scenario of a neighboring access point device, a keepalive scenario of the terminal, or an indoor positioning scenario of the terminal.

According to a second aspect, an embodiment of this application provides a method for sending a probe request packet. The method may be performed by an access point device or a module (such as a chip) used in an access point device. The method includes: receiving a first probe request packet from a terminal, where information carried in the first probe request packet is less than information carried in a second probe request packet, and the second probe request packet is used for exchanging capability information between the terminal and a to-be-connected access point device; and sending a probe response packet to the terminal.

For beneficial effects of the second aspect, refer to the descriptions of the beneficial effects of the first aspect.

According to any implementation method of the first aspect or the second aspect:

In a possible implementation method, the first probe request packet includes one or more of the following information: a service set identifier, a basic rate set of the terminal, an extended rate set of the terminal, or a direct sequence parameter set of the terminal.

In a possible implementation method, the first probe request packet does not include one or more of the following information: high throughput capability information of the terminal, extended capability information of the terminal, or wireless fidelity protected setup information of the terminal.

In a possible implementation method, the probe response packet includes one or more of the following information: a service set identifier of the access point device, a basic rate set of the access point device, a direct sequence parameter set of the access point device, or encrypted information of the access point device.

In a possible implementation method, the probe response packet does not include one or more of the following information: an extended rate set of the access point device, high throughput capability information of the access point device, wireless fidelity protected setup information of the access point device, a country code, wireless fidelity protected access information of the access point device, or extended capability information of the access point device.

According to a third aspect, an embodiment of this application provides a communication apparatus. The apparatus may be a terminal, or may be a module (such as a chip) used in a terminal. The apparatus has a function of implementing any implementation method of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be an access point device, or may be a module (such as a chip) used in an access point device. The apparatus has a function of implementing any implementation method of the second aspect. The function may be implemented by hardware, or may be implemented by hardware executing corresponding software. The hardware or the software includes one or more modules corresponding to the function.

According to a fifth aspect, an embodiment of this application provides a communication apparatus, including a processor and a memory. The memory is configured to store computer instructions. When the apparatus runs, the processor executes the computer instructions stored in the memory, to enable the apparatus to perform any implementation method of the first aspect and the second aspect.

According to a sixth aspect, an embodiment of this application provides a communication apparatus, including a unit or means (means) configured to perform steps of any implementation method of the first aspect and the second aspect.

According to a seventh aspect, an embodiment of this application provides a communication apparatus, including a processor and an interface circuit. The processor is configured to: communicate with another apparatus through the interface circuit; and perform any implementation method of the first aspect and the second aspect. There are one or more processors.

According to an eighth aspect, an embodiment of this application provides a communication apparatus, including a processor coupled to a memory. The processor is configured to invoke a program stored in the memory, to perform any implementation method of the first aspect and the second aspect. The memory may be located inside or outside the apparatus. In addition, there may be one or more processors.

According to a ninth aspect, an embodiment of this application further provides a computer-readable storage medium. The computer-readable storage medium stores instructions, and when the instructions are run on a communication apparatus, any implementation method of the first aspect and the second aspect is performed.

According to a tenth aspect, an embodiment of this application further provides a computer program product. The computer program product includes a computer program or instructions. When the computer program or the instructions are run by a communication apparatus, any implementation method of the first aspect and the second aspect is performed.

According to an eleventh aspect, an embodiment of this application further provides a chip system, including a processor, configured to perform any implementation method of the first aspect and the second aspect.

BRIEF DESCRIPTION OF DRAWINGS

FIG. 1 is a diagram of an architecture of a communication system to which an embodiment of this application is applied;
FIG. 2 is a diagram of a method for sending a probe request packet according to an embodiment of this application;
FIG. 3 is a diagram of distribution of scanning time of a single channel;
FIG. 4 is a diagram of increasing scanning time of a single channel;
FIG. 5 is a diagram of a method for sending a probe request packet according to an embodiment of this application;
FIG. 6 is a diagram of an example of a probe request packet according to an embodiment of this application;
FIG. 7 is a diagram of a structure of a communication apparatus according to an embodiment of this application; and
FIG. 8 is a diagram of a structure of a communication apparatus according to an embodiment of this application.

DESCRIPTION OF EMBODIMENTS

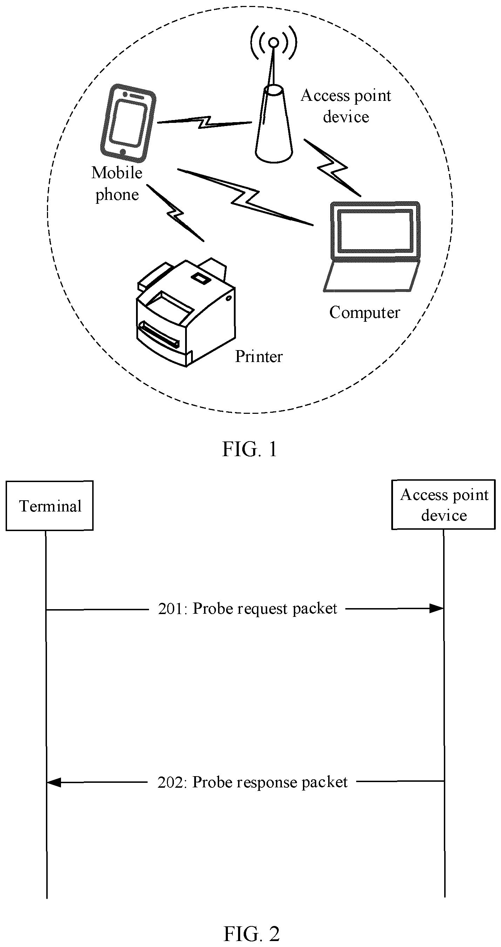

FIG. 1 is a diagram of an architecture of a communication system to which an embodiment of this application is applied. As shown in FIG. 1, the communication system includes at least one access point (access point, AP) device (one access point device is used as an example in the figure) and at least one terminal (a plurality of terminals are used as an example in the figure). The terminal is connected to the access point device in a wireless manner, and the access point device is connected to a core network in a wireless or wired manner.

The access point device is an access device used by the terminal to access a network in a wireless manner, and the terminal has a wireless fidelity (wireless fidelity, Wi-Fi) function. The access point device may be, for example, a home router, a modem, an intelligent terminal (such as a mobile phone or a tablet computer) with a hotspot function, or an enterprise-level network device that can provide an internet access service.

The terminal is a device that has a wireless transceiver function. The terminal may be widely used in various scenarios, for example, device-to-device (device-to-device, D2D), vehicle to everything (vehicle to everything, V2X) communication, machine-type communication (machine-type communication, MTC), Internet of Things (Internet of things, IoT), virtual reality, augmented reality, industrial control, autonomous driving, telemedicine, a smart grid, smart furniture, smart office, smart wearable, smart transportation, and a smart city. The terminal may be a mobile phone, a tablet computer, a computer with a wireless transceiver function, a wearable device, a smart home device (such as a smart desk lamp, a floor-scanning robot, or a printer), or the like. A specific technology and a specific device form that are used by the terminal are not limited in embodiments of this application.

A Wi-Fi scanning scenario is one of the most common scenarios of a Wi-Fi device today, and a scanning manner of active probing by sending a probe request (probe request) packet accounts for the vast majority of the scenarios. To ensure compatibility, vendors in the industry generally use a lowest rate of 11b 1M (2.4G) or 11a 6M (5G) to send the probe request packet. 11b 1M (2.4G) means that a probe request packet is sent with a carrier frequency of 2.4 GHz and a sending rate of 1 M bit/second (bps). 11a 6M (5G) means that a probe request packet is sent with a carrier frequency of 5 GHz and a sending rate of 6 Mbps.

FIG. 2 is a schematic flowchart of a method for sending a probe request packet according to an embodiment of this application. The method includes the following steps.

Step 201: A terminal sends the probe request (probe request) packet.

The probe request packet includes but is not limited to the following information:

(1) Service set identifier (service set identifier, SSID). The SSID includes an identifier field (ID) and a length (length) field. When the ID=0 and a length=0, it indicates that the probe request packet is a broadcast packet.
(2) Basic rate (rate) set of the terminal
The basic rate set of the terminal includes a transmission rate supported by the terminal.
(3) Extended rate (extended supported rate) set of the terminal.
The extended rate set of the terminal includes an extended transmission rate supported by the terminal.
(4) Direct sequence parameter set (direct sequence parameter set, DSPS) of the terminal.
The DSPS of the terminal includes a current operating channel of the terminal.
(5) High throughput capability information (high throughput capability information, HT cap info) of the terminal.
(6) Extended capability information (extended capability information, extended cap info) of the terminal.
(7) Wi-Fi protected setup (Wi-Fi protected setup, WPS) information of the terminal.
The WPS information is used to automatically configure the SSID and a wireless encryption key for the terminal.

Step 202: The terminal receives a probe response (probe response) packet from an access point device.

The probe response packet includes but is not limited to the following information:

(1) SSID of the access point device.
The SSID of the access point device indicates information such as a network name of the access point device.
(2) Basic rate set of the access point device.
The basic rate set of the access point device includes a transmission rate supported by the access point device.
(3) DSPS of the access point device.
The DSPS of the access point device includes a current operating channel of the access point device.
(4) Encrypted information of the access point device.
Optionally, the encrypted information may be robust security network (robust security network, RSN) information, and the RSN information indicates an encryption manner.
(5) Extended rate set of the access point device.
(6) High throughput capability information (HT cap info) of the access point device.
(7) Extended capability information (extended cap info) of the access point device.
(8) Wi-Fi protected setup (WPS) information of the access point device.
(9) Country (country) code.
(10) Wi-Fi protected access (Wi-Fi protected access, WPA) information of the access point device.

In the foregoing solution, an access point device near the terminal can be obtained through scanning based on the probe request packet sent by the terminal and the probe response packet responded by the access point device.

It should be noted that, a quantity of access point devices that send the probe response packet to the terminal is not limited in this application, that is, when a plurality of access point devices all receive the probe request packet, the access point devices may separately send the probe response packet to the terminal.

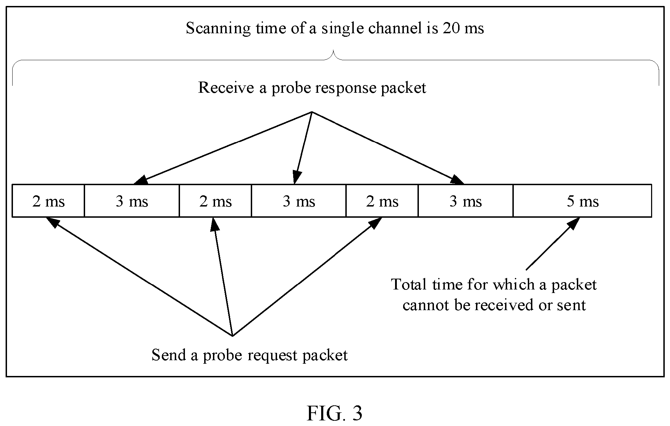

Scanning time of a single channel of the terminal is about 20 ms (ms). With an average channel occupancy rate of 25%, real time for monitoring the probe response packet returned by the access point device in the single channel is only about 9 ms. FIG. 3 is a diagram of distribution of the scanning time of the single channel. Total time for sending the probe request packet is 2+2+2=6 ms, total time for receiving the probe response packet is 3+3+3=9 ms, and total time for which a packet cannot be received or sent is 5 ms. Therefore, the time for monitoring the probe response packet returned by the access point device is about 9 ms. That the packet cannot be received or sent means that the probe response packet cannot be received and the probe request packet cannot be sent. It can be learned that scanning efficiency is low, and frequent scanning may cause air interface congestion, thereby affecting a throughput.

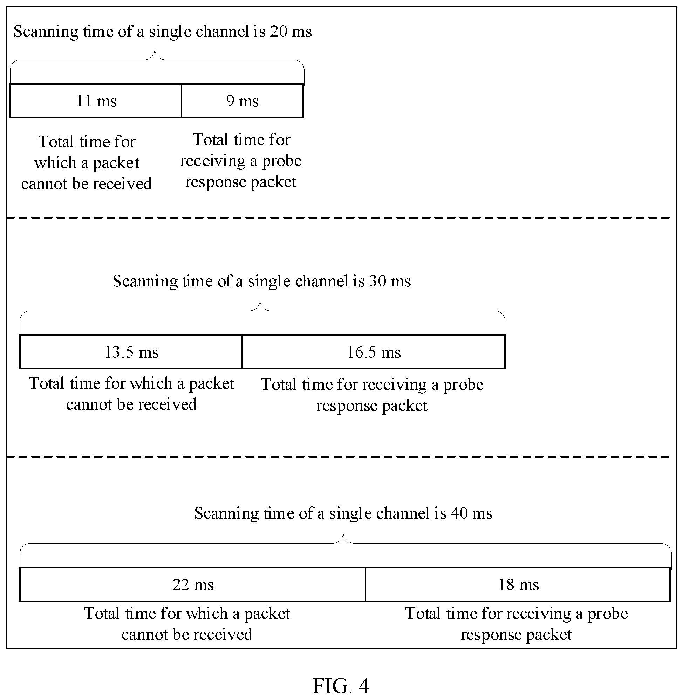

To increase a possibility that an access point device is obtained through scanning, the scanning time of the single channel may be increased. FIG. 4 is a diagram of increasing the scanning time of the single channel. It can be learned that when the scanning time of the single channel is 20 ms, the total time for receiving the probe response packet is 9 ms. When the scanning time of the single channel is increased to 30 ms, the total time for receiving the probe response packet can be increased to 16.5 ms. When the scanning time of the single channel is increased to 40 ms, the total time for receiving the probe response packet can be increased to 18 ms. Because the total time for receiving the probe response packet is increased, the possibility that the access point device is obtained through scanning by the terminal is increased accordingly. It should be noted that "total time for which a packet cannot be received" in FIG. 4 includes the total time for which the packet cannot be received or sent and total time for sending the probe response packet.

In the foregoing solution, although the possibility that the access point device is obtained through scanning by the terminal can be increased, scanning efficiency is not changed. That is, in the foregoing solution, the total time for receiving the probe response packet is increased only by increasing total scanning time of the single channel, and to some extent, a scanning result is obtained by sacrificing the time. In addition, with increasing abundance of Internet of Things terminals, hundreds of Internet of Things terminals may keep initiating scanning (that is, send a probe request packet) in small fixed space. If a large quantity of Internet of Things terminals use the foregoing solution to ensure a scanning result, air interface congestion is caused, and communication quality of each channel is greatly affected.

Therefore, how to improve scanning efficiency, reduce air interface occupancy caused by frequent scanning, and improve a probability that a surrounding access point device is obtained through scanning by the terminal needs to be resolved.

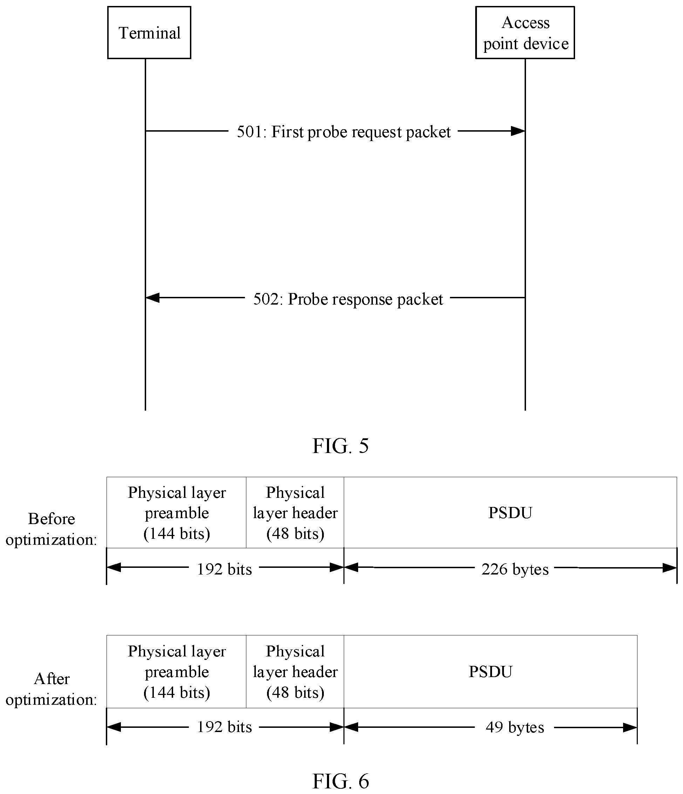

FIG. 5 is a diagram of a method for sending a probe request packet according to an embodiment of this application. The method is applicable to a scenario in which a terminal performs scanning and determines specific access point devices that are available around the terminal. In this scenario, the access point devices do not need to obtain all information of the terminal. Therefore, when sending a probe request packet, the terminal does not need to include all the information of the terminal in the probe request packet, for example, needs to include only some information of the terminal.

The method includes the following steps.

Step 501: The terminal sends a first probe request packet.

The first probe request packet includes some information of the terminal. Specifically, information carried in the first probe request packet is less than information carried in a second probe request packet.

The second probe request packet is used for exchanging capability information between the terminal and a to-be-connected access point device. Alternatively, it is understood that the second probe request packet is a probe request packet sent before the terminal establishes a connection to the to-be-connected access point device. The second probe request packet may include all information of the terminal. For example, the information carried in the second probe request packet may be the same as information carried in the probe request packet described in step 201.

In an implementation method, the first probe request packet includes one or more of the following information: a service set identifier (SSID), a basic rate set of the terminal, an extended rate set of the terminal, or a direct sequence parameter set (DSPS) of the terminal. In addition, the first probe request packet does not include one or more of the following information: high throughput capability information (HT cap info) of the terminal, extended capability information (extended cap info) of the terminal, or Wi-Fi protected setup (WPS) information of the terminal.

Step 502: The terminal receives a probe response packet from the access point device.

In an implementation method, the probe response packet includes basic information of the access point device and extended information of the access point device. In this case, when receiving a simplified probe request packet (the first probe request packet), the access point device considers that the terminal is a terminal with a low capability, and still includes the basic information of the access point device and the extended information of the access point device in the probe response packet sent to the terminal. In this solution, the access point device treats probe request packets of different types in a unified manner, thereby helping reduce complexity.

In another implementation method, the probe response packet includes basic information of the access point device, but does not include extended information of the access point device. In this case, when receiving a simplified probe request packet (the first probe request packet), the access point device considers that the terminal is a terminal with a low capability, and includes the basic information of the access point device but not the extended information of the access point device in the probe response packet sent to the terminal. In this solution, the access point device treats probe request packets of different types in a different manner, thereby helping reduce signaling overheads.

In an implementation method, the basic information of the access point device includes but is not limited to one or more of the following information: an SSID of the access point device, a basic rate set of the access point device, a DSPS of the access point device, or encrypted information of the access point device. The extended information of the access point device includes but is not limited to one or more of the following information: an extended rate set of the access point device, high throughput capability information (HT cap info) of the access point device, extended capability information (extended cap info) of the access point device, Wi-Fi protected setup (WPS) information of the access point device, a country (country) code, Wi-Fi protected access (WPA) information of the access point device, or extended capability (extended capability) information of the access point device.

In an implementation method, step 502 is specifically as follows: The terminal sends the first probe request packet in a scanning scenario of the access point device. Therefore, the terminal sends the second probe request packet if the terminal is not in the scanning scenario of the access point device, for example, is in a connection scenario of the access point device. For meanings of the first probe request packet and the second probe request packet, refer to the foregoing descriptions. For example, the scanning scenario of the access point device may be any one of the following:

(1) a scanning scenario in which an access point device around the terminal is obtained, where
to be specific, the terminal performs scanning to learn of specific access point devices around the terminal; and after the access point devices are obtained through scanning, a list of the access point devices obtained through scanning may be displayed on an interface of the terminal;
(2) a scanning scenario of a neighboring access point device, where
to be specific, the terminal scans for the neighboring access point device when the terminal is started as a temporary access point device, and the temporary access point device is also referred to as a soft access point device (SoftAp);
(3) a keepalive scenario of the terminal, where
in this scenario, the first probe request packet sent by the terminal is a unicast packet, and therefore the SSID in the first probe request packet is an SSID of an access point device that has established a connection to the terminal; or
(4) an indoor positioning scenario of the terminal.

It should be noted that, a quantity of access point devices that send the probe response packet to the terminal is not limited in this application, that is, when a plurality of access point devices all receive the first probe request packet, the access point devices may separately send the probe response packet to the terminal.

In the foregoing solution, the following beneficial effects are implemented: First, when scanning time of a single channel remains unchanged, because time for sending the probe request packet is shortened, there is more time for monitoring the probe response packet, so that more access point devices can be obtained through scanning, thereby improving average scanning efficiency of a single round of scanning. Second, because the time for sending the probe request packet is shortened, power consumption of the terminal is reduced. Third, because the time for sending the probe request packet is shortened, air interface occupancy is reduced. When air interface occupancy is reduced for a large quantity of terminals, air interface congestion can be significantly improved, and throughputs and throughput rates of the terminals are improved.

For example, the terminal is a mobile phone. A user opens the mobile phone to scan for a Wi-Fi list. A Wi-Fi chip of the mobile phone identifies a scanning scenario of list obtaining, and sends the first probe request packet. The first probe request packet includes some information of the terminal. Therefore, less sending time may be occupied, listening time is prolonged, scanning efficiency is improved, and sending power consumption is reduced. After receiving the first probe request packet sent by the mobile phone, one or more access point devices around the mobile phone return a probe response packet. After receiving the probe response packet responded by the access point device, the Wi-Fi chip of the mobile phone parses the probe response packet. After parsing the probe response packet, the Wi-Fi chip of the mobile phone of the user displays basic information (such as a Wi-Fi name) of the access point device in the Wi-Fi list of the mobile phone.

The following describes gains brought by an optimized probe request packet in this application with reference to an example. FIG. 6 is a diagram of an example of a probe request packet according to an embodiment of this application. In this example, one probe request packet includes a physical layer preamble (PHY Preamble), a physical layer header (PHY Header), and a physical layer service data unit (PHY service data unit, PSDU). The physical layer preamble occupies fixed 144 bits (bit), and the physical layer header occupies fixed 48 bits. When the probe request packet is sent at a rate of 11b 1M (2.4G), total time occupied by the physical layer preamble and the physical layer header is 192 microseconds (μs), that is,

$$\frac{192\ bit}{1Mbit/s} = 192\ \mu s$$

Before the optimization, a size of one PSDU is 226 bytes (byte). Therefore, time occupied by the PSDU is calculated as follows:

$$\frac{226\ bytes * 8\ bits/byte}{1Mbit/s} \approx 1808\ \mu s$$

It can be learned that in a scanning scenario, one probe request packet consumes time of about 2 ms (1808 μs+192 μs).

After the optimization, that is, unnecessary information (that is, the extended information) of the probe request packet is deleted, the size of the PSDU is shortened to 49 bytes. Therefore, the time occupied by the PSDU is shortened to:

$$\frac{49\ bytes * 8\ bits/byte}{1Mbits/s} \approx 392\ \mu s$$

In this case, one probe request packet consumes only about 584 μs (392 μs+192 μs). The total time is reduced to about 29% of the previous time, with air interface occupancy being reduced by about 70%. This greatly improves scanning scenarios of a plurality of terminals in a complex environment. In addition to reducing the air interface occupancy, shorter packet sending time also significantly reduces power consumption.

The method for simplifying field information in the probe request packet provided in the foregoing embodiments of this application is not only applicable to a scenario of scanning for the access point device, but also may be extended to another application scenario. For example, when the access point device sends a beacon frame (or beacon packet) by broadcast, the beacon frame generally includes but is not limited to the following information: the SSID of the access point device, the basic rate set of the access point device, the DSPS of the access point device, the extended rate set of the access point device, the encrypted information of the access point device, the Wi-Fi protected access (WPA) information of the access point device, the high throughput capability information (HT cap info) of the access point device, the extended capability information (extended cap info) of the access point device, the Wi-Fi protected setup (WPS) information of the access point device, country (country) code, traffic indication map (traffic indication map, TIM), and extended rate physical layer (extended rate PHY) information of the access point device. After the field information in the beacon frame is simplified by using the method in this application, the beacon frame may include some information of the foregoing information, for example, include only the SSID of the access point device, the basic rate set of the access point device, the DSPS of the access point device, the extended rate set of the access point device, the encrypted information of the access point device, and the Wi-Fi protected access (WPA) information of the access point device. According to the method, overheads of the beacon frame can be reduced, which helps reduce air interface congestion and reduce overheads of the access point device.

It may be understood that, to implement functions in the foregoing embodiments, the access point device and the terminal include corresponding hardware structures and/or software modules for performing the functions. A person skilled in the art should be easily aware that, with reference to the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

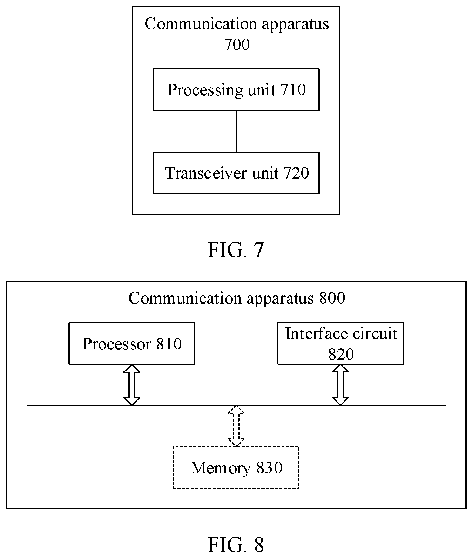

FIG. 7 and FIG. 8 are diagrams of structures of possible communication apparatuses according to an embodiment of this application. These communication apparatuses may be configured to implement a function of the terminal or a function of the access point device in the foregoing method embodiments. Therefore, beneficial effects of the foregoing method embodiments can also be implemented. In embodiments of this application, the communication apparatus may be the terminal shown in FIG. 1, may be the access point device shown in FIG. 1, or may be a module (such as a chip) used in the terminal or the access point device.

A communication apparatus 700 shown in FIG. 7 includes a processing unit 710 and a transceiver unit 720. The communication apparatus 700 is configured to implement the function of the terminal or the function of the access point device in the method embodiment shown in FIG. 5.

When the communication apparatus 700 is configured to implement the function of the terminal in the method embodiment shown in FIG. 5, the processing unit 710 is configured to: control the transceiver unit 720 to send a first probe request packet, where information carried in the first probe request packet is less than information carried in a second probe request packet, and the second probe request packet is used for exchanging capability information between the terminal and a to-be-connected access point device; and receive a probe response packet from the access point device.

In a possible implementation method, the processing unit 710 is specifically configured to control the transceiver unit 720 to send the first probe request packet when the transceiver unit 720 is in a scanning scenario of the access point device.

When the communication apparatus 700 is configured to implement the function of the access point device in the method embodiment shown in FIG. 5, the processing unit 710 is configured to: control the transceiver unit 720 to receive a first probe request packet from the terminal, where information carried in the first probe request packet is less than information carried in a second probe request packet, and the second probe request packet is used for exchanging capability information between the terminal and a to-be-connected access point device; and send a probe response packet to the terminal.

For more detailed descriptions of the processing unit 710 and the transceiver unit 720, refer to related descriptions in the method embodiment shown in FIG. 5.

A communication apparatus 800 shown in FIG. 8 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run the instructions, or store data generated after the processor 810 runs the instructions.

When the communication apparatus 800 is configured to implement the method shown FIG. 5, the processor 810 is configured to implement a function of the processing unit 710, and the interface circuit 820 is configured to implement a function of the transceiver unit 720.

It can be understood that the processor in the embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access point device or a terminal. Certainly, the processor and the storage medium may exist in the access point device or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, an access point device, a terminal, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent:

including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A method for sending a probe request packet, performed by a terminal or a module used in a terminal, and comprising:

   sending a first probe request packet, wherein information carried in the first probe request packet is less than information carried in a second probe request packet, and the second probe request packet is used for exchanging capability information between the terminal and a to-be-connected access point device; and
   receiving a probe response packet from the access point device.

2. The method according to claim 1, wherein the sending a first probe request packet comprises:
   sending the first probe request packet in a scanning scenario of the access point device.

3. The method according to claim 2, wherein the scanning scenario of the access point device comprises one or more of the following:

   a scanning scenario in which an access point device around the terminal is obtained;
   a scanning scenario of a neighboring access point device;
   a keepalive scenario of the terminal; or
   an indoor positioning scenario of the terminal.

4. The method according to any one of claims 1 to 3, wherein the first probe request packet comprises one or more of the following information: a service set identifier, a basic rate set of the terminal, an extended rate set of the terminal, or a direct sequence parameter set of the terminal.

5. The method according to claim 4, wherein the first probe request packet does not comprise one or more of the following information: high throughput capability information of the terminal, extended capability information of the terminal, or wireless fidelity protected setup information of the terminal.

6. The method according to claim 4 or 5, wherein the probe response packet comprises one or more of the following information: a service set identifier of the access point device, a basic rate set of the access point device, a direct sequence parameter set of the access point device, or encrypted information of the access point device.

7. The method according to claim 6, wherein the probe response packet does not comprise one or more of the following information: an extended rate set of the access point device, high throughput capability information of the access point device, wireless fidelity protected setup information of the access point device, a country code, wireless fidelity protected access information of the access point device, or extended capability information of the access point device.

8. A method for sending a probe request packet, performed by an access point device or a module used in an access point device, and comprising:

   receiving a first probe request packet from a terminal, wherein information carried in the first probe request packet is less than information carried in a second probe request packet, and the second probe request packet is used for exchanging capability information between the terminal and a to-be-connected access point device; and
   sending a probe response packet to the terminal.

9. The method according to claim 8, wherein the first probe request packet comprises one or more of the following information: a service set identifier, a basic rate set of the terminal, an extended rate set of the terminal, or a direct sequence parameter set of the terminal.

10. The method according to claim 9, wherein the first probe request packet does not comprise one or more of the following information: high throughput capability information of the terminal, extended capability information of the terminal, or wireless fidelity protected setup information of the terminal.

11. The method according to claim 9 or 10, wherein the probe response packet comprises one or more of the following information: a service set identifier of the access point device, a basic rate set of the access point device, a direct sequence parameter set of the access point device, or encrypted information of the access point device.

12. The method according to claim 11, wherein the probe response packet does not comprise one or more of the following information: an extended rate set of the access point device, high throughput capability information of the access point device, wireless fidelity protected setup information of the access point device, a country code, wireless fidelity protected access information of the access point device, or extended capability information of the access point device.

13. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 7 or to implement the method according to any one of claims 8 to 12 by using a logic circuit or by executing code instructions.

14. A communication apparatus, comprising a module configured to perform the method according to any one of claims 1 to 7 or a module configured to perform the method according to any one of claims 8 to 12.

15. A computer-readable storage medium, wherein the storage medium stores a computer program or instructions, and when the computer program or the instructions are executed by a communication apparatus, the method according to any one of claims 1 to 7 or the method according to any one of claims 8 to 12 is implemented.

FIG. 1

FIG. 2

Scanning time of a single channel is 20 ms

Receive a probe response packet

| 2 ms | 3 ms | 2 ms | 3 ms | 2 ms | 3 ms | 5 ms |
|------|------|------|------|------|------|------|

Total time for which a packet cannot be received or sent

Send a probe request packet

FIG. 3

Scanning time of a single channel is 20 ms

| 11 ms | 9 ms |
|---|---|
| Total time for which a packet cannot be received | Total time for receiving a probe response packet |

Scanning time of a single channel is 30 ms

| 13.5 ms | 16.5 ms |
|---|---|
| Total time for which a packet cannot be received | Total time for receiving a probe response packet |

Scanning time of a single channel is 40 ms

| 22 ms | 18 ms |
|---|---|
| Total time for which a packet cannot be received | Total time for receiving a probe response packet |

FIG. 4

```
┌──────────┐                                    ┌──────────────┐
│ Terminal │                                    │    Access    │
│          │                                    │ point device │
└──────────┘                                    └──────────────┘
     │                                                 │
     │───── 501: First probe request packet ──────────▶│
     │                                                 │
     │                                                 │
     │◀──────── 502: Probe response packet ────────────│
     │                                                 │
     │                                                 │
```

FIG. 5

| | Physical layer preamble (144 bits) | Physical layer header (48 bits) | PSDU |
|---|---|---|---|
| Before optimization: | | | |

◀──────── 192 bits ────────▶ ◀──────── 226 bytes ────────▶

| | Physical layer preamble (144 bits) | Physical layer header (48 bits) | PSDU |
|---|---|---|---|
| After optimization: | | | |

◀──────── 192 bits ────────▶ ◀──────── 49 bytes ────────▶

FIG. 6

Communication apparatus 700

Processing unit 710

Transceiver unit 720

FIG. 7

Communication apparatus 800

Processor 810

Interface circuit 820

Memory 830

FIG. 8

## INTERNATIONAL SEARCH REPORT

| International application No. |
|---|
| **PCT/CN2023/128710** |

| A. | CLASSIFICATION OF SUBJECT MATTER |
|---|---|

H04W 48/16(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, 3GPP: 探测请求, 探测响应, 能力, 省略, 减少, 简化, 取消, probe Request+, probe Respon+, ability, capability, omi+, reduct+, simplif+, cancel+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 104718777 A (LG ELECTRONICS INC.) 17 June 2015 (2015-06-17) description, paragraphs 0066-0388, and figure 5 | 1-6, 8-11, 13-15 |
| Y | CN 104718777 A (LG ELECTRONICS INC.) 17 June 2015 (2015-06-17) description, paragraphs 0066-0388, and figure 5 | 7, 12 |
| Y | CN 105493421 A (QUALCOMM INC.) 13 April 2016 (2016-04-13) description, paragraphs 0072-0247 | 7, 12 |
| A | US 2015098358 A1 (LG ELECTRONICS INC.) 09 April 2015 (2015-04-09) entire document | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 January 2024** | **24 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/128710**

| Patent document cited in search report | | | Publication date (day/month/year) | Patent family member(s) | | | Publication date (day/month/year) |
|---|---|---|---|---|---|---|---|
| CN | 104718777 | A | 17 June 2015 | US | 2017070948 | A1 | 09 March 2017 |
| | | | | US | 2015245282 | A1 | 27 August 2015 |
| | | | | JP | 2015531210 | A | 29 October 2015 |
| | | | | EP | 2884804 | A1 | 17 June 2015 |
| | | | | KR | 20150058200 | A | 28 May 2015 |
| | | | | WO | 2014027829 | A1 | 20 February 2014 |
| CN | 105493421 | A | 13 April 2016 | WO | 2015031368 | A2 | 05 March 2015 |
| | | | | KR | 20160048857 | A | 04 May 2016 |
| | | | | US | 2015063335 | A1 | 05 March 2015 |
| | | | | JP | 2016536899 | A | 24 November 2016 |
| | | | | EP | 3039913 | A2 | 06 July 2016 |
| US | 2015098358 | A1 | 09 April 2015 | WO | 2013165200 | A1 | 07 November 2013 |
| | | | | JP | 2015520969 | A | 23 July 2015 |
| | | | | KR | 20150013120 | A | 04 February 2015 |
| | | | | EP | 2846588 | A1 | 11 March 2015 |
| | | | | CN | 104272809 | A | 07 January 2015 |

Form PCT/ISA/210 (patent family annex) (July 2022)

**EP 4 626 081 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211719047